# EUROPÄISCHE PATENTSCHRIFT

(11) **EP 2 496 509 B1**
(45) Veröffentlichungstag und Bekanntmachung des Hinweises auf die Patenterteilung: **27.01.2016**
(21) Anmeldenummer: 10771765.4
(22) Anmeldetag: 03.11.2010
(51) Int. Cl.: B66B 11/02

(54) **AUFZUG**
ELEVATOR
ASCENSEUR

(30) Priorität: 06.11.2009 DE 102009053249
(43) Veröffentlichungstag der Anmeldung: 12.09.2012
(73) Patentinhaber: Wobben Properties GmbH, 26607 Aurich (DE)
(72) Erfinder: MEYER, Hermann, 26532 Großheide (DE); NEUNDLINGER, Ulrich, 26607 Aurich (DE)
(74) Vertreter: Eisenführ Speiser
(86) Internationale Anmeldenummer: PCT/EP2010/066667
(87) Internationale Veröffentlichungsnummer: WO 2011/054833

(56) Entgegenhaltungen:
- EP-A2- 1 240 426
- WO-A1-01/83290
- DE-A1-102008 005 556
- JP-A- 11 165 990
- US-A- 1 571 100
- US-A- 6 102 163

## Beschreibung

Die vorliegende Erfindung betrifft einen Aufzug mit einer Antriebseinheit. Weiterhin betrifft die vorliegende Erfindung eine Windenergieanlage mit einem Aufzug.

Insbesondere bei großen Windenergieanlagen sind heute Aufzüge zum Personen- und Material-Transport üblich. Dies erspart z. B. Wartungstechnikern, die Arbeiten in der Gondel der Windenergieanlage zu verrichten haben, einen anstrengenden und zeitraubenden Aufstieg über die in der Regel im Turm senkrecht nach oben führende Steigleiter. Bei Windenergieanlagen mit heute nicht unüblichen Nabenhöhen von ca. 140m würde das nämlich einen senkrechten Aufstieg (und natürlich auch einen nachfolgenden Abstieg) über eben diese 140m bedeuten. Bedenkt man darüber hinaus, dass ein Wartungsteam im Laufe eines Arbeitstages in mehreren Windenergieanlagen tätig sein kann, wird schnell deutlich, welche außerordentliche körperliche Belastung die Benutzung der Steigleiter sein kann.

In dem Maß, in dem die Größe der Windenergieanlagen zunimmt und in dem die Bedeutung der Windenergie wächst, werden immer mehr Anlagen in der Größe aufgestellt, in der ein Aufzug wenigstens wünschenswert wenn nicht sogar erforderlich ist. Die Aufzüge werden dadurch auch immer mehr zum Kostenfaktor, weil sie eben nicht mehr nur vereinzelt in Windenergieanlagen auftauchen.

Als Stand der Technik wird an dieser Stelle allgemein auf folgende Druckschriften hingewiesen: DE 10 2005 009 500 A1, WO 97/11020 A1, DE 101 04 351 A1 sowie DE 10 2006 034 299 A1.

Aufgabe der vorliegenden Erfindung ist es daher, die Kosten für den Aufzug zu verringern und so den Aufzug wirtschaftlich attraktiver zu machen.

Dazu ist der Aufzug der eingangs genannten Art gekennzeichnet durch einen als Fahrkorb verwendeten Schrank.

Dabei liegt der Erfindung die Erkenntnis zu Grunde, dass sich ein Schrank in seinem grundsätzlichen Aufbau mit Boden, Seitenwänden und einer Tür nicht von einem speziell für einen Aufzug hergestellten Fahrkorb unterscheidet. Natürlich gibt es Unterschiede, z. B. in der Aufhängung und Bedienung der Tür, aber diese Unterschiede können, soweit sie einer Verwendung eines Schrankes als Fahrkorb entgegenstehen, beseitigt werden, sodass der Aufwand insgesamt immer noch geringer ist als der Aufwand für einen eigens für den Aufzug konstruierten Fahrkorb.

Um einen raumsparenden Transport des Aufzugs zu seinem Einsatzort zu ermöglichen, sind an der Oberseite des Fahrkorbs an gegenüberliegenden Seiten im Wesentlichen horizontal angeordnete Halter und daran im Wesentlichen vertikal verlaufend angeordnete Träger der Antriebseinheit vorgesehen, wobei die Träger lösbar mit den Haltern verbunden und vertikal verschiebbar sind. Dadurch kann die Antriebseinheit für den Transport in den Fahrkorb hineingeschoben werden, sodass für den Transport lediglich die Außenabmessungen des Fahrkorbs relevant sind und die Antriebseinheit keinen zusätzlichen Transportraum benötigt.

Dazu wird in der ersten Position die Verbindung zwischen der Antriebseinheit und dem Fahrkorb in der Betriebsposition hergestellt, sodass der gesamte Innenraum des Fahrkorbs zum Transport von Fracht und/oder Personen bereitsteht, während in der zweiten, vertikal verschobenen Position die Antriebseinheit in der Transportraum sparenden abgesenkten Position im Fahrkorb gehalten wird.

Zum Wechsel zwischen der Transportposition und der Betriebsposition wird lediglich die Verbindung zwischen Antriebseinheit und Fahrkorb gelöst, die Antriebseinheit in die gewünschte Position gebracht und die Verbindung in der entsprechend anderen Position wieder hergestellt bzw. festgezogen. Weitere Eingriffe sind nicht erforderlich. Dadurch ist der Wechsel zwischen Transportposition und Betriebsposition sehr einfach und zeitsparend zu realisieren.

In einer bevorzugten Weiterbildung der Erfindung ist das Aufzugssystem gekennzeichnet durch eine Antriebseinheit mit einer Durchlaufwinde. Dadurch ist keine aufwändige Verschienung innerhalb des Turms erforderlich, sondern es müssen lediglich zwei ausreichend dimensionierte Seile bereitgestellt werden. Eines für den normalen Betrieb sowie eines als Fangseil, um den Aufzug im Fall eines technischen Versagens halten zu können.

Besonders bevorzugt ist die gesamte Steuerung in der Antriebseinheit angeordnet und ein an die Steuerung angeschlossenes Bedienelement reicht bis in den Fahrkorb herunter, sodass ein Wechsel der Antriebseinheit zwischen der Transportposition und der Betriebsposition ohne jeglichen Eingriff in die Steuerung und/oder das daran angeschlossene Bedienelement möglich ist.

Eine weitere Möglichkeit der Kosteneinsparung ergibt sich, wenn an Stelle eines besonderen Fahrkorbes ein Schrank, der üblicherweise als Schaltschrank verwendet wird, als Fahrkorb für einen Aufzug benutzt wird. Schaltschränke können in großen Stückzahlen kostengünstiger hergestellt werden können, als Fahrkörbe für Aufzüge verwendet werden und sind auf einfache Weise an die besonderen Anforderungen als Fahrkorb für einen Aufzug anpassbar, sodass der Kostenvorteil dadurch auch nicht verloren geht.

Besonders vorteilhaft wird der erfindungsgemäße Aufzug in einer Windenergieanlage eingesetzt, da der Aufzug dort, abgesehen von der Errichtung, nur gelegentlich benutzt wird und daher zwar die grundlegenden Anforderungen an einen Aufzug erfüllen muss, besonderer Komfort aber nicht erforderlich ist.

Eine übliche Windenergieanlage, die mit einem erfindungsgemäßen Aufzug ausgestattet werden kann, umfasst jedenfalls ein Fundament oder anderen Fuß, auf dem ein Turm, insbesondere ein rohrförmiger Stahl- oder Betonturm aufgestellt ist, an dessen oberem Ende eine Windenergieanlagengondel angeordnet ist. An der Gondel ist ein aerodynamischer Rotor befestigt, der mittels Wind in Drehbewegung versetzt werden soll und dazu wenigstens eines, üblicherweise drei, Rotorblätter aufweist. Die Gondel umfasst zudem einige Elemente zum Betrieb der Windenergieanlage, was üblicherweise den mit dem aerodynamischen Rotor gekoppelten Generator beinhalten kann sowie diverse weitere Elemente wie eine Antriebseinheit zum Verdrehen der Gondel zum Verändern ihrer Azimut-Position, oder beispielsweise eine Flugbefeuerung, um die Gondel für den Flugverkehr besser sichtbar zu machen, um nur einige Beispiele zu nennen. Der erfindungsgemäße Aufzug ist insbesondere in dem Turm vorzusehen, um eine oder mehrere Personen und/oder Gegenstände vom Turmfuß zur Gondel zu befördern, und/oder umgekehrt.

Nachfolgend wird die Erfindung anhand der Fig. näher beschrieben. Dabei zeigen:
- Fig. 1: eine perspektivische Gesamtansicht eines erfindungsgemäßen Aufzuges;
- Fig. 2: einen Schaltschrank-Korpus;
- Fig. 3: den Schaltschrank-Korpus zeit Tür und Seitenteilen;
- Fig. 4: einen Schaltschrank-Korpus gemäß Fig. 3 und zusätzlich eine Antriebseinheit;
- Fig. 5: einen Schaltschrank-Korpus gemäß Fig. 4, aber mit in dem Fahrkorb abgesenkter Antriebseinheit;
- Fig. 6: eine vereinfachte Darstellung des Bedienteils im Inneren des Fahrkorbs;
- Fig. 7: eine vereinfachte Darstellung des Bedienteils am Fahrkorb außen; und
- Fig. 8: eine Ansicht des Steuerschrankes von der dem Inneren des Fahrkorbes zugewandten Seite.

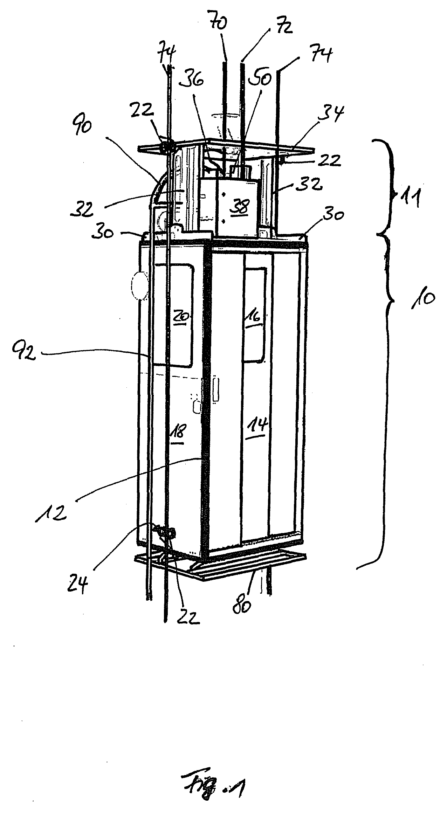

In Fig. 1 ist der vollständige Aufzug mit dem Fahrkorb 10 und der Antriebseinheit 11 dargestellt. Der Fahrkorb 10 umfasst im Wesentlichen einen Schaltschrank-Korpus 12 als tragende Struktur. In diesen Schaltschrank-Korpus 12 ist eine Schiebetür 14 eingebaut, in der wiederum ein Fenster 16 ausgebildet ist. Ebenso sind Seitenteile und natürlich eine (in dieser Fig. nicht dargestellte) Rückwand eingebaut. In dieser Fig. gut zu erkennen ist das Seitenteil 18 mit einem Fenster 20.

An der in dieser Fig. sichtbaren linken Seite sind weiterhin Führungsseilrollen 22 für das Führungsseil 74 sowie eine Tragseilführung 24, durch welche das Tragseil 70 geführt wird, dargestellt. Entsprechende Führungsseilrollen finden sich auf der gegenüberliegenden, aber in dieser Fig. nicht dargestellten Seite des erfindungsgemäßen Fahrkorbs 10. Dort befindet sich auch eine (in dieser Fig. ebenfalls nicht dargestellte) Fangseilführung für das Fangseil 72, das den Fahrkorb z. B. beim Versagen des normalen Fahrantriebs hält.

An der Oberseite des Schaltschrank-Korpus 12 sind Halter 30 angebracht und an diesen Haltern 30 sind wiederum Träger 32 angebaut, die senkrecht nach oben verlaufen. Auf diesen Trägern 32 befindet sich eine Dachplatte 34, die den Aufzug gegen herabfallende Teile schützt. Weiterhin ist an den Haltern 32 eine Durchlaufwinde 36 angebracht, mittels welcher der Aufzug an dem Tragseil 70 in der gewünschten Richtung aufwärts oder abwärts fahren kann. Weiterhin ist ein Steuerschrank 38 vorgesehen, in welchem die gesamte Steuerung untergebracht ist. Außerdem ist in dieser Fig. eine Fangeinrichtung 50 erkennbar, welche als Sicherheitseinrichtung den Aufzug an einem Fangseil 72 hält, wenn der Antrieb aus Durchlaufwinde 36 und Tragseil 70 versagen sollte. Zusätzlich zu dem Tragseil 70 und dem Fangseil 72 sind noch Führungsseile 74 vorgesehen, welche den Aufzug führen, sodass ein Pendeln des Aufzuges vermieden wird.

Für die Stromversorgung ist ein Kabel 92 vorgesehen, das über eine Kabelführung 90 in die Antriebseinheit hineingeführt wird. Schließlich ist ein Bodenschalter 80 dargestellt, der ein Auftreffen auf dem Boden (oder auf einem anderen Hindernis) erkennt und den Aufzug anhalten kann.

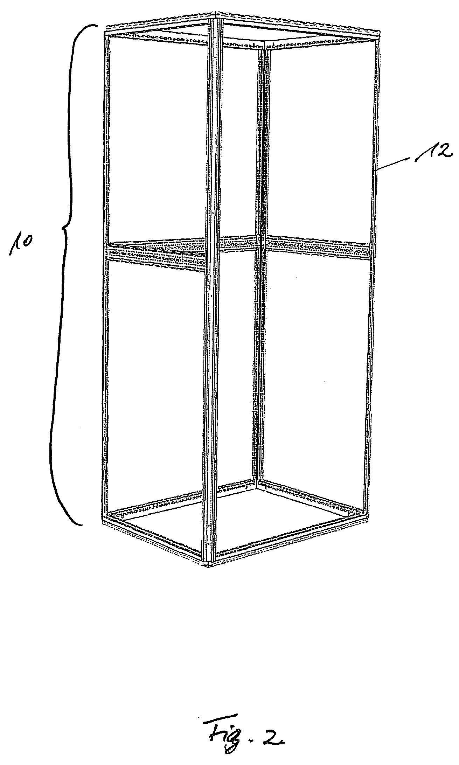

Fig. 2 zeigt in einer perspektivischen Darstellung einen Schaltschrank-Korpus 12, der erfindungsgemäß die tragende Struktur des Fahrkorbes 10 bildet. Ein solcher Schaltschrank-Korpus 12 ist heute ein in großen Stückzahlen hergestelltes und deswegen relativ preisgünstiges Bauteil, das aber eine ausreichende Festigkeit und Tragfähigkeit aufweist, um den Personen- und Material-Transport bewerkstelligen zu können.

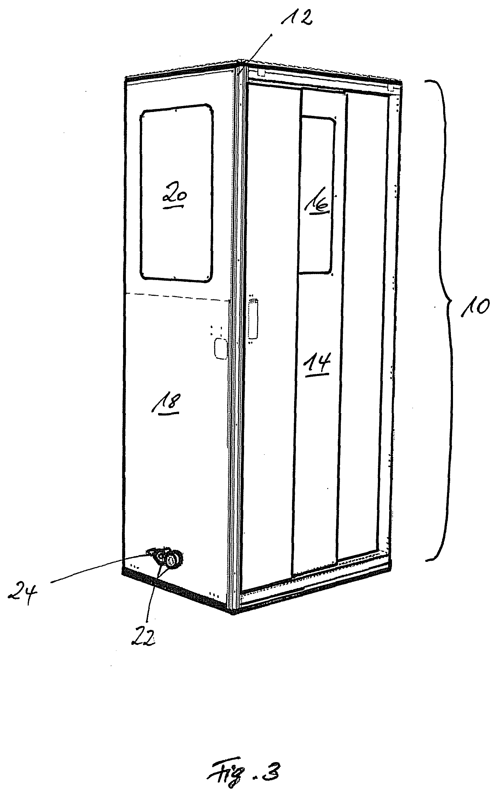

Fig. 3 zeigt diesen Schaltschrank-Korpus 12 mit einer eingebauten Schiebetür 14, in welcher ein Fenster 16 vorgesehen ist. Weiterhin ist in dieser Fig. ein Seitenteil 18 mit einem weiteren Fenster 20 zu erkennen und im unteren Bereich des Seitenteiles 18 sind Führungsseilrollen 22 sowie eine Tragseilführung 24 dargestellt.

In dieser Fig. ist gut zu erkennen, dass aus dem Schaltschrank-Korpus 12 durch relativ einfache Maßnahmen ein Fahrkorb für einen Aufzug werden kann, der alle Anforderungen erfüllt, insgesamt aber deutlich preisgünstiger als ein Standard-Fahrkorb ist.

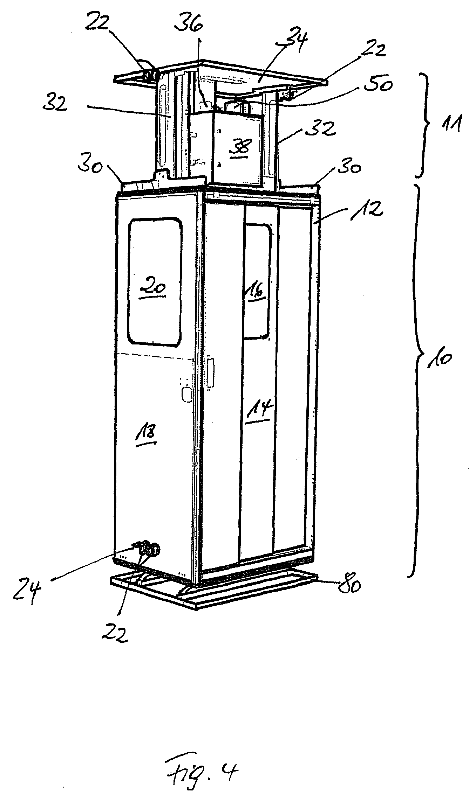

In Fig. 4 ist die Darstellung aus Fig. 3 ergänzt um Halter 30, die oben auf dem Schaltschrank-Korpus 12 befestigt sind. An diesen Haltern 30 sind wiederum Träger 32 senkrecht angebracht. Auf den Trägern 32 sitzt eine Dachplatte 34. Diese Dachplatte 34 verhindert, dass von oben Teile in den Fahrkorb oder den Antrieb hineinfallen können. An den Trägern ist eine Durchlaufwinde 36, ein Steuerschrank 38 sowie eine Fangeinrichtung 50 angeordnet, mit deren Hilfe die wesentlichen Funktionen des Aufzuges verwirklicht werden. Weiterhin sind Führungsseilrollen 22 vorgesehen, die den Aufzug während des Betriebs entlang vorhandener Führungsseile führen und somit ein Schwingen des Aufzuges unterbinden. An der Unterseite des Fahrkorbes 10 ist ein Bodenschalter 80 dargestellt, der ein Aufsetzen des Aufzuges auf dem Boden oder auf einem Hindernis erkennt und den Aufzug sofort stillsetzen kann.

Die Träger 32 sind lösbar mit den Haltern 30 verbunden und können in Richtung der Hochachse des Aufzuges verschoben werden. Dadurch kann die von diesen Trägern 32 getragene Antriebseinheit in den Fahrkorb 10 abgesenkt werden, sodass der Aufzug für den Transport weniger Raum, nämlich im Wesentlichen den Raum des Fahrkorbes 10 selbst beansprucht.

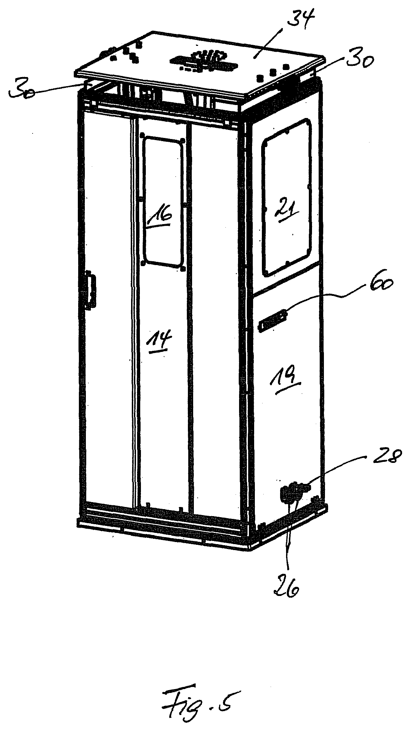

Dies ist in Fig. 5 dargestellt. In dieser Fig. ist oberhalb der Halter 30 die Dachplatte 34 zu sehen, während der Rest der Antriebseinheit mit den Trägern 32 (in dieser Fig. nicht dargestellt) in den Fahrkorb 10 abgesenkt ist.

Weiterhin ist in dieser perspektivischen Darstellung die rechte Seite des Aufzuges mit einer rechten Seitenwand 19 und einem rechten Seitenwandfenster 21 sowie einem an der rechten Seitenwand 19 dargestellten Außenbedienteil 60 und Führungsseilrollen 26 und einer Fangseilführung 28 dargestellt.

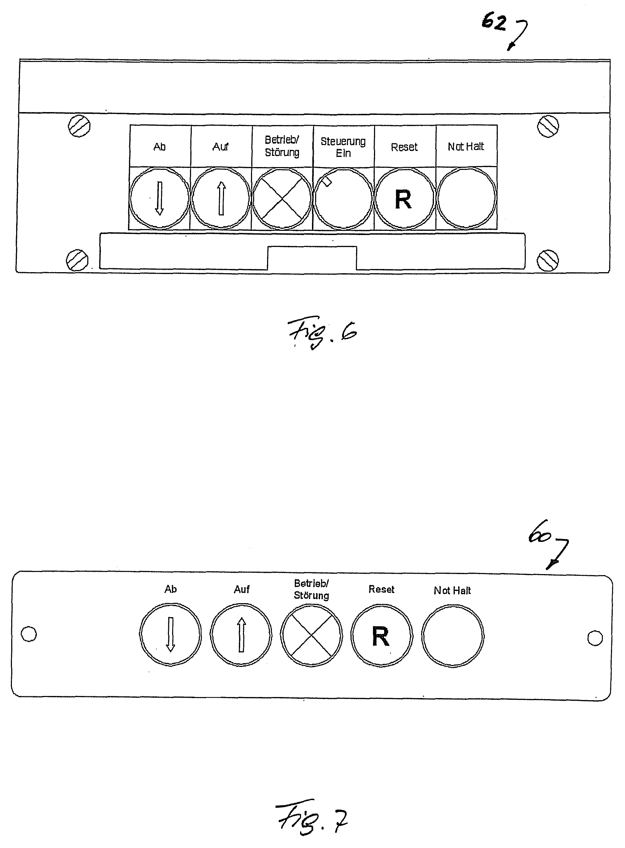

Um den Aufzug bedienen zu können, ist natürlich wenigstens eine Bedieneinheit erforderlich. Fig. 6 zeigt eine solche Bedieneinheit 62, die im Inneren des Fahrkorbes vorgesehen ist und neben Bedientasten für die Fahrt abwärts oder aufwärts einen Schalter zum Einschalten der Steuerung, eine Rücksetztaste, einen Nothalt-Schalter sowie eine Betriebs/Störungs-Leuchte umfasst. Damit können die wesentlichen Aufzugsfunktionen gesteuert und die Betriebsbereitschaft bzw. eine Störung signalisiert werden.

Fig. 7 zeigt ein Außenbedienteil 60, über welches die grundlegenden Funktionen, z. B. beim Materialtransport, bedient werden können. Dieses Außenbedienteil 60 wird verwendet, wenn kein Personentransport stattfindet. Dann kann der mit Material gefüllte Aufzug z. B. mit der Taste "Auf" in Betrieb gesetzt werden, um das Material vom Fuß der Anlage nach oben zu transportieren. Mit der Taste "Ab" wird eine automatische Fahrt in der entgegen gesetzten Richtung, also von oben nach unten veranlasst.

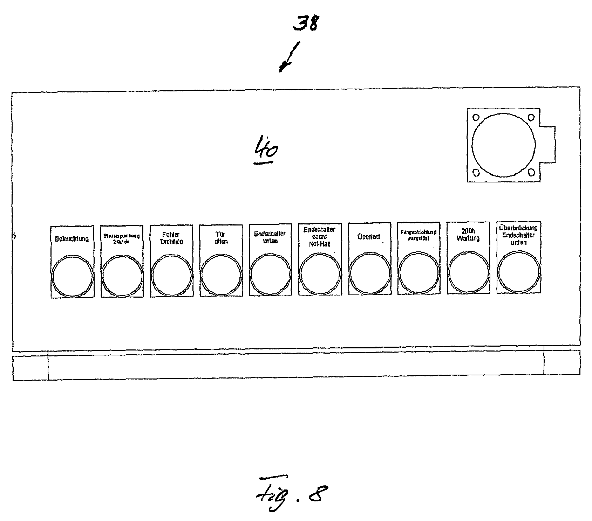

Fig. 8 zeigt die Seite 40 des Steuerschrankes 38, die dem inneren des Fahrkorbes zugewandt ist. An dieser Seite des Steuerschrankes 38 ist eine Mehrzahl von Leuchten und Schaltern angebracht, die unterschiedliche Betriebszustände signalisieren bzw. die Betätigung bestimmter Funktionen erlauben. Im Normalbetrieb wird der Aufzug über das Bedienteil 60 oder das Bedienteil 62 bedient. Sobald an einem dieser Bedienteile aber eine Störung angezeigt wird, kann der Bediener mit einem Blick nach oben, nämlich zur in Fig. 8 dargestellten Unterseite 40 des Steuerschrankes 38, weitere Informationen über die Art der Störung erhalten.

Der mit "Beleuchtung" beschriftete Schalter dient zum Ein- und Ausschalten der Beleuchtung.

Die mit "Steuerspannung 24 V ok" bezeichnete Leuchte zeigt an, ob die für den einwandfreien Betrieb der Steuerung erforderliche Spannung von 24 V zur Verfügung steht und der Aufzug betrieben werden kann.

Die Leuchte "Fehler Drehfeld" zeigt, ob das am Motor anliegende Drehfeld für den gewünschten Betrieb in Ordnung ist oder eben nicht. Eine eingeschaltete Leuchte weist auf einen Fehler hin. Dies kann z. B. eine fehlende Phase in der Stromversorgung oder ein falscher Anschluss des Drehfeldes sein.

Die "Tür offen"-Leuchte zeigt genau das an, nämlich dass die Tür des Aufzuges nicht richtig verschlossen ist. Sofern die Tür richtig geschlossen ist, kann diese Anzeige auch auf einen defekten Türschalter hinweisen. Beides führt nämlich dazu, dass der Aufzug sich nicht in Betrieb setzen lässt. Auf diese Weise wird sichergestellt, dass nur bei sicher und richtig verschlossener Tür der Aufzug fährt.

Die Leuchte "Endschalter unten" zeigt ein Auslösen des unteren Endschalters (des sogenannten Korbbodenschalters) an, z. B. wenn die untere Position erreicht ist oder der Schalter durch ein Hindernis betätigt wird. Ein Auslösen des oberen Endschalters bzw. der Not-Halt-Funktion wird durch die Leuchte "Endschalter oben/Not-Halt" signalisiert. Dauerndes Leuchten zeigt das Erreichen der oberen Betriebsposition an, Blinken die oberste Not-Halt-Position.

Die Leuchte "Überlast" zeigt eine Überladung des Aufzuges an und die Leuchte "Fangvorrichtung ausgelöst" weist darauf hin, dass die Fangvorrichtung den Aufzug am Fangseil festgesetzt hat, sodass eine Weiterfahrt ohne Freigabe der Fangvorrichtung nicht möglich ist.

Da von einer zuverlässigen Funktion des Antriebs und der Sicherheitseinrichtungen auch Menschenleben abhängen, ist ein Wartungsintervall vorgeschrieben, innerhalb dessen diese Komponenten wiederkehrend überprüft werden müssen. Im vorliegenden Beispiel handelt es sich um ein 200-Stunden-Intervall. Auch dafür ist eine Anzeigeleuchte vorgesehen, um den Benutzer auf den Ablauf dieses Intervalls hinzuweisen. Diese Leuchte ist mit "200h Wartung" beschriftet.

Schließlich ist ein Schalter "Überbrückung Endschalter unten" vorgesehen, der eine Überbrückung des Endschalters und damit eine Außerfunktionsetzung dieses Schalters ermöglicht, wenn z. B. bei der Installation zur Neuinbetriebnahme oder auch beim Austausch der Seile erforderlich ist.

## Patentansprüche

1. Aufzug mit einem Fahrkorb und einer Antriebseinheit,
**gekennzeichnet durch** einen als Fahrkorb verwendeten Schrank, und **durch** an der Oberseite des Fahrkorbs (10) an gegenüberliegenden Seiten im Wesentlichen horizontal angeordnete Halter (30) und daran im Wesentlichen vertikal verlaufend angeordnete Träger (32) der Antriebseinheit, wobei die Träger (32) lösbar mit den Haltern (30) verbunden und vertikal verschiebbar sind, und **durch** eine erste Position, in welcher die Träger (32) mit den Haltern (30) verbindbar sind, und eine ein vorgegebenes Maß vertikal davon verschobene zweite Position, in der die Träger (32) ebenfalls mit den Haltern (30) verbindbar sind.

2. Aufzug nach Anspruch 1,
**gekennzeichnet durch** eine lösbare Verbindung zwischen Fahrkorb und Antriebseinheit.

3. Aufzug nach einem der vorstehenden Ansprüche,
**gekennzeichnet durch** eine Antriebseinheit mit einer Durchlaufwinde.

4. Aufzug nach einem der vorstehenden Ansprüche,
**gekennzeichnet durch** eine Anordnung der gesamten Steuerung in der Antriebseinheit.

5. Aufzug nach einem der vorstehenden Ansprüche,
**gekennzeichnet durch** ein an die Steuerung angeschlossenes Bedienelement, welches bis in den Fahrkorb reicht.

6. Verwendung eines Schaltschrankes als Fahrkorb eines Aufzugs gemäß Anspruch 1 und/oder Verwendung eines Schaltschrank-Korpus als Fahrkorb-Korpus eines Aufzugs gemäß Anspruch 1.

7. Windenergieanlage mit einem Aufzug nach einem der Ansprüche 1 bis 5.

## Claims

1. Lift having a lift cage and a drive unit,
**characterised by** a cabinet which is used as a lift cage and by retention members (30) which are substantially horizontally arranged at the upper side of the lift cage (10) at opposing sides and carriers (32) of the drive unit which are arranged thereon so as to extend in a substantially vertical manner, wherein the carriers (32) are releasably connected to the retention members (30) and can be vertically displaced, and by a first position in which the carriers (32) can be connected to the retention members (30) and a second position which is displaced by a predetermined dimension vertically therefrom and in which the carriers (32) can also be connected to the retention members (30).

2. Lift according to claim 1,
**characterised by** a releasable connection between the lift cage and drive unit.

3. Lift according to either of the preceding claims, **characterised by** a drive unit having a continuous winch.

4. Lift according to any one of the preceding claims, **characterised by** an arrangement of the entire control system in the drive unit.

5. Lift according to any one of the preceding claims, **characterised by** an operating element which is connected to the control system and which extends into the lift cage.

6. Use of a switch cabinet as a lift cage of a lift according to claim 1 and/or use of a switch cabinet body as a lift cage body of a lift according to claim 1.

7. Wind turbine having a lift according to any one of claims 1 to 5.

## Revendications

1. Ascenseur avec une cabine et une unité d'entraînement,
**caractérisé par** une armoire utilisée comme cabine, et par des appuis (30) disposés sensiblement horizontalement sur le côté supérieur de la cabine (10) sur des côtés en regard et des supports (32) disposés en s'étendant sensiblement verticalement dessus de l'unité d'entraînement, les supports (32) étant reliés de manière détachable aux appuis (30) et étant mobiles verticalement, et par une première position, dans laquelle les supports (32) peuvent être reliés aux appuis (30), et une seconde position décalée d'une mesure prescrite verticalement de celle-ci, dans laquelle les supports (32) peuvent aussi être reliés aux appuis (30).

2. Ascenseur selon la revendication 1,
**caractérisé par** une liaison détachable entre la cabine et l'unité d'entraînement.

3. Ascenseur selon l'une quelconque des revendications précédentes,
**caractérisé par** une unité d'entraînement avec un treuil continu.

4. Ascenseur selon l'une quelconque des revendications précédentes,
**caractérisé par** un agencement de la commande entière dans l'unité d'entraînement.

5. Ascenseur selon l'une quelconque des revendications précédentes,
**caractérisé par** un élément de commande raccordé à la commande, qui parvient jusque dans la cabine.

6. Utilisation d'une armoire de distribution comme cabine d'un ascenseur selon la revendication 1 et/ou utilisation d'un corps d'armoire de distribution comme corps de cabine d'un ascenseur selon la revendication 1.

7. Eolienne avec un ascenseur selon l'une quelconque des revendications 1 à 5.
